# EUROPÄISCHE PATENTSCHRIFT

(11) **EP 2 501 793 B1**
(45) Veröffentlichungstag und Bekanntmachung des Hinweises auf die Patenterteilung: **04.06.2014**
(21) Anmeldenummer: 10793135.4
(22) Anmeldetag: 19.11.2010
(51) Int. Cl.: C12G 1/022, C12G 3/02

(54) **VERWENDUNG VON WENIGSTENS EINEM DER GATTUNG AUREOBASIDIUM PULLULANS ANGEHÖRENDEN MIKROORGANISMUS ALS VERGÄRUNGSMITTEL FÜR FRÜCHTE**
USE OF AT LEAST ONE MICROORGANISM OF THE GENUS AUREOBASIDIUM PULLULANS IN THE FERMENTATION OF FRUIT
UTILISATION D'AU MOINS UN MICROORGANISME DU GENRE AUREOBASIDIUM PULLULANS DANS LA FERMENTATION DES FRUITS

(30) Priorität: 20.11.2009 AT 18472009
(43) Veröffentlichungstag der Anmeldung: 26.09.2012
(73) Patentinhaber: Erber Aktiengesellschaft, 3130 Herzogenburg (AT)
(72) Erfinder: BINDER, Eva, Maria, A-3430 Tulln (AT); DANNER, Herbert, A-3435 Zwentendorf (AT); DONAT, Christina, A-3462 Bierbaum am Kleebühl (AT)
(74) Vertreter: Cunow, Gerda
(86) Internationale Anmeldenummer: PCT/AT2010/000452
(87) Internationale Veröffentlichungsnummer: WO 2011/060473

(56) Entgegenhaltungen:
- WO-A1-02/102161
- WO-A1-2007/063268
- WO-A2-2008/114304
- DIMAKOPOULOU M ET AL: "Phyllosphere grapevine yeast Aureobasidium pullulans reduces Aspergillus carbonarius (sour rot) incidence in wine-producing vineyards in Greece", BIOLOGICAL CONTROL, Bd. 46, Nr. 2, 1. August 2008 (2008-08-01) , Seiten 158-165, XP022796110, SAN DIEGO, CA, US ISSN: 1049-9644, DOI: 10.1016/J.BIOCONTROL.2008.04.015 [gefunden am 2008-04-29]
- R. CASTORIA, , F. DE CURTIS, G. LIMA, L. CAPUTO, S. PACIFICO AND V. DE CICCO: "Aureobasidium pullulans (LS-30) an antagonist of postharvest pathogens of fruits: study on its modes of action", POSTHARVEST BIOLOGY AND TECHNOLOGY, Bd. 22, 2001, Seiten 7-17, XP002628434, DOI: 10.1016/S0925-5214(00)00186-1
- VERGINER MARKUS ET AL: "Production of Volatile Metabolites by Grape-Associated Microorganisms", JOURNAL OF AGRICULTURAL AND FOOD CHEMISTRY, Bd. 58, Nr. 14, Juli 2010 (2010-07), Seiten 8344-8350, XP002628435, ISSN: 0021-8561
- Katharina Tinnacher: "Aureobasidium pullulans - Ein neuer Ansatz zu einer erfolgreichen biologischen Botrytisbekämpfung im Weinbau?, Masterarbeit", März 2010 (2010-03), Universität für Bodenkultur, Wien, XP002628436, Document consists of 2FP, 1-3, 37-44, 59-64, 77 Seite 38 Seite 61 - Seite 64 Seite 77
- Anonymous: "Botector", bio-ferm, XP002628437, Gefunden im Internet: URL:http://www.bio-ferm.com/de/index.php?i d=196 [gefunden am 2011-03-15]
- F.J. Purkarthofer PR: "Facts: Botrytis (Graufäule) und Botrytisbekämpfung", Purkarthofer, XP002628438, Gefunden im Internet: URL:http://www.purkarthofer-pr.at/presseme ldungen/pm_botector_01-09-09.htm [gefunden am 2011-03-15]
- Anonymous: "Sicherheitsdatenblatt", bio-ferm, 26. Januar 2010 (2010-01-26), Seiten 1-6, XP002628439, Gefunden im Internet: URL:http://www.bio-ferm.com/media/file/Sic herheitsdatenblatt_Botector.pdf [gefunden am 2011-03-15]

## Beschreibung

Die vorliegende Erfindung bezieht sich auf die Verwendung von wenigstens einem der Gattung Aureobasidium pullulans angehörenden Mikroorganismus.

Mikroorganismen der Gattung Aureobasidium pullulans gehören zu den hefeartigen Pilzen, welche häufig in Böden, Blumenerde, Pflanzenteilen, Kompost, Abwasser, Früchten, Fruchtprodukten und auf Samen, wie verschiedenen Baumaterialien vorkommen. Einzelne Stämme von Aureobasidium pullulans sind einerseits gefürchtete Materialzerstörer, welche Zellulose in Pflanzenfasern jeglicher Art abzubauen vermögen und segar Holz angreifen können und andererseits sind jedoch andere Aureobasidium pullulans Stämme wichtige Organismen in der Biotechnologie. So dienen beispielsweise Aureobasidium pullulans Stämme als Produzenten von Pullulan, welches als Dickungsmittel und als Zusatz zu energiereduzierten Lebensmitteln ebenso Verwendung findet wie als Gleitmittel bei der Kunstfasergewinnung.

Auch zur Herstellung bzw. Verwendung in Pflanzenschutzoder Pflanzenstärkungsmitteln, zur Bekämpfung von bakteriellen und/oder pilzartigen Pflanzenerkrankungen, insbesondere zur Bekämpfung von Feuerbrand, werden in letzter Zeit Aureobasidium pullulans Stämme als Spritzmittel in einem sauren Milieu eingesetzt. Die Verwendung von derartigen auf vermehrungsfähigen Pilzstrukturen basierenden Spritzmittel haben gegenüber herkömmlichen Spritzmitteln den Vorteil, dass in den damit behandelten Früchten bzw. Obstbäumen toxische Reste des Spritzmittels nicht mehr nachgewiesen werden können. Insbesondere bei Verwendung von auf Basis von auf Antibiotika basierenden Spritzmitteln ergibt sich die Problematik der Resistenzbildung, was bei den pilzlichen Spritzmitteln nicht zu befürchten ist und daher einen wesentlichen Vorteil bietet. Eine Sperrfrist der Verwendung der Spritzmittel vor der Ernte und inbesondere die Ausbildung einer Resistenz gegenüber bestimmten Antibiotikastämmen ist somit bei Verwendung von auf Basis von Aureobasidium pullulans basierenden Spritzmitteln nicht gegeben.

So ist beispielsweise das Dokument DIMAKOPOULOU M et al. "Phyllosphere grapevine yeast Aureobasidium pullulans reduces Aspergillus carbonarius (sour rot) incidence in wineproducing vineyards in Greece", BIOLOGICAL CONTROL, Bd. 46, Nr. 2, 1. August 2008 ein derartiger Einsatzzweck zu entnehmen.

Darüber hinaus wurden in letzter Zeit zusätzlich zu den für Steinobst geeigneten Spritzmitteln gegen Feuerbrand, welche auf bestimmten Aureobasidium pullulans Stämmen basieren, auch Spritzmittel entwickelt, welche gegen die Grauschimmelfäule bei verschiedenen Nutzpflanzen wirken, wobei ebenfalls ausgewählte Aureobasidium pullulans Stämme zum Einsatz gelangen. Hiebei werden die Pflanzen bzw. Früchte, wie beispielsweise Tomaten, Wein, aber auch Zierpflanzen nach der Blüte und vor der Ernte mehrmals mit einem Spritzmittel, welches Aureobasidium pullulans enthält, gespritzt, wodurch die Entwicklung der Grauschimmelfäule, insbesondere der Rohfäule, welche negative Auswirkungen auf die unreifen Früchte besitzt, hintangehalten bzw. vermindert werden soll. Die Verwendung von derartigen auf Aureobasidium pullulans basierenden Spritzmitteln hat insbesondere im Obstbau den Vorteil, dass die Pflanzen, insbesondere Früchte, auch noch kurze Zeit vor der Ernte gespritzt werden können bzw. dürfen, da eine Sperrfrist, die bei der Verwendung von chemischen Spritzmitteln nicht existiert, was insbesondere in feuchten Sommern von Vorteil ist, da Feuchtigkeit die Entwicklung von Grauschimmelfäule begünstigt.

Es wurde nun überraschenderweise festgestellt, dass neben der Wirkung von Aureobasidium pullulans gegen den Feuerbranderreger und gegen Botrytis cinerea verursachte Pflanzenerkrankungen spezielle Stämme der Gattung Aureobasidium pullulans gegen weitere auf Pflanzen bzw. Früchteoberflächen vorhandene Mikroorganismen wirken und insbesondere deren negative Auswirkungen auf die Qualität von aus den Früchte hergestellten, alkoholischen Getränken hintanhalten können, so dass die vorliegende Erfindung auf die Verwendung von wenigstens einem speziellen der Gattung Aureobasidium pullulans angehörenden Mikroorganismus zur Herstellung eines Vergärungshilfsmittels für Früchte abzielt.

Zur Lösung dieser Aufgabe wird gemäß der erfindungsgemäßen Verwendung wenigstens ein der Gattung Aureobasidium pullulans angehörender Mikroorganismus, gewählt aus Aureobasidium pullulans DSM 14940 oder Aureobasidium pullulans DSM 14941 als Vergärungshilfsmittel für Früchte, nämlich als Mittel zur Beschleunigung der Vergärung und/oder Mittel zur Vervollständigung der Vergärung von Früchten eingesetzt.

Für die Herstellung von alkoholischen Getränken aus Früchten durch Vergärung von Fruchtsäften bzw. Fruchtmaischen wird üblicherweise entweder die sogenannte Spontanvergärung herangezogen, bei welcher die auf den Früchten vorhandenen Hefen zur Vergärung der in den Fruchtsäften bzw. Maischen enthaltenen Zucker herangezogen werden, wobei derartige Spontanvergärungen häufig zu Fehlgärungen bzw. unvollständigen Vergärungen führen, da die natürlich vorkommenden Hefepopulationen häufig nicht leistungsstark genug sind, um den Zucker vollständig in Alkohol umzuwandeln. Darüber hinaus führt der Mangel an hefeverwertbaren Nährstoffen und Trübteilchen in dem Fruchtsaft bzw. der Maische neben der üblicherweise ungünstigen Temperatur während der Vergärung zu einem übergroßen Stress für die Hefen, welcher ebenfalls in einer Fehlgärung bzw. Gärhemmung während der Spontanvergärung resultieren kann.

Auch wenn Reinzuchthefen der Gärung zugesetzt werden, kann eine Vergärung von Fruchtmaischen bzw. Fruchtsäften stecken bleiben und insbesondere eine weitere Zugabe von Reinzuchthefen oder Hefenährsalzen bzw. die Erhöhung der Gärtemperatur haben üblicherweise negative Effekte auf die Qualität des erzielten Gärprodukts, wie beispielsweise des erzielten Weins oder Mosts, so dass versucht werden muss, eine möglichst rasche und vollständige Gärung zu erzielen.

Durch die erfindungsgemäße Verwendung der Aureobasidium pullulans Stämme DSM 14941 und DSM 14940 als Vergärungshilfsmittel für Früchte ist es überraschenderweise gelungen, nicht nur die Gärung insgesamt zu beschleunigen, sondern auch insbesondere bei Heranziehung der Spontangärung mit Hilfe der auf den Früchten direkt vorhandenen Hefestämme ein vollständiges Durchgären ohne Fehlgärungen und ohne Gärabbruch zu ermöglichen.

Insbesondere wenn, wie dies einer Weiterbildung der vorliegenden Erfindung entspricht, die Aureobasidium pullulans Stämme DSM 14940 oder DSM 14941 zur Herstellung eines Vergärungshilfsmittels für Weintrauben verwendet werden, gelingt es dem Verbrauchertrend folgend reintönige, frische und fruchtige Weine herzustellen und insbesondere auch Terroir-Weine, welche durch die Spontanvergärung von auf den Weintrauben vorhandenen Saccharomyces Stämmen erzielt werden, sicher und zuverlässig, vollständig und insbesondere schnell durchzugären, so dass Gärfehler mit Sicherheit hintangehalten werden.

Indem, wie dies einer Weiterbildung der Erfindung entspricht, der Mikroorganismus so angewandt wird, dass er als wässrige Suspension auf die Früchte aufgebracht wird, oder direkt in eine Fruchtmaische eingebracht wird, gelingt es unmittelbar vor der Vergärung die eine Vergärung störenden Mikroorganismen durch Anwendung einer wässrigen Suspension von wenigstens einem der Stämme Aureobasidium pullulans DSM 14940 oder DSM 14941 zu verdrängen und dadurch die Vergärung der Fruchtmaische bzw. des aus der Maische hergestellten Fruchtsafts zu beschleunigen und insbesondere zu gewährleisten, dass die Vergärung vollständig und ohne stecken zu bleiben abläuft. Überraschenderweise konnte durch die erfindungsgemäße Verwendung auch eine deutliche Verbesserung des Gärverhaltens gegenüber Weintrauben erzielt werden, welche mit herkömmlichen Mitteln gegen Botrytis cinerea behandelt wurden.

Indem die erfindungsgemäße Verwendung derart erfolgt, dass die wässrige Suspension wenigstens zweimal vor Herstellung einer Fruchtmaische auf die Früchte aufgebracht wird, kann eine weitere Verbesserung des Resultats der Vergärung und insbesondere eine weitere Beschleunigung der Vergärung der Früchte erzielt werden. Das wenigstens zweimalige Aufbringen der Suspension, welche abweichend von den als Spritzmitteln eingesetzten Suspensionen ein saures Milieu nicht aufweist, vor der Herstellung einer Fruchtmaische auf die Früchte hat sich als besonders vorteilhaft erwiesen, wobei das Aufbringen bei lagerfähigen Früchten zweimal nach der Ernte der Früchte vorgenommen werden kann oder wenn es sich um nicht lagerfähige bzw. leicht verderbliche Früchte handelt, wie beispielsweise Weintrauben, gegebenenfalls auch unmittelbar vor der Ernte bereits einmal die wässrige Suspension auf die Früchte aufgebracht werden kann, um für die Vergärung schädliche Mikroorganismen mit Sicherheit unschädlich zu machen. Insbesondere gelingt es durch eine derartige Verwendung von wenigstens einem Aureobasidium pullulans Stamm, das Gärverhalten von Fruchtsäften, insbesondere Wein, positiv zu beeinflussen, wobei insbesondere bei der Spontanvergärung ein rasches und vollständiges Durchgären beobachtet werden kann.

Indem die erfindungsgemäße Verwendung so geführt wird, dass der Mikroorganismus in der wässrigen Suspension in einer Konzentration von 5*10⁷ KBE/l bis 5*10¹¹ KBE/l, vorzugsweise 1*10⁹ bis 1*10¹⁰ KBE/l enthalten ist, gelingt neben einer Beschleunigung der Gärung, insbesondere der Spontanvergärung zusätzlich eine vollständige Beseitigung von gärungsstörenden Mikroorganismen aus der Fruchtmaische bzw. von den Oberflächen der zu vergärenden Früchte, so dass eine Fehlgärung bzw. eine Gärhemmung mit Sicherheit ausgeschlossen werden kann. Darüber hinaus wird bei der Verwendung von den erfindungsgemäß eingesetzten Konzentrationen des Mikroorganismus Aureobasidium pullulans DSM 14940 bzw. DSM 14941 in der Suspension auch sichergestellt, dass keinerlei Störung der Saftvergärung von Früchten geschieht und auch keinerlei Infektion des Ernteguts durch Sekundärerreger, wie beispielsweise Penicillium, Aspergiullus, Essigfäule, Trichothezium, Cladosporium oder Alternaria besteht.

Indem, wie dies einer Weiterbildung der vorliegenden Erfindung entspricht, der Mikroorganismus so verwendet wird, daß er auf einem inerten Träger, insbesondere einem Bentonit, Zeolith oder Kieselgur, Hefe bzw. Hefezellwänden, Milchpulver, Molkepulver, Kaliumsulfat oder Kalziumcarbonat, immobilisiert vorliegt, kann eine weitere beschleunigte Vergärung und insbesondere gleichzeitig eine Entfernung bzw. Abtrennung von unerwünschten Schadstoffen erzielt werden. Insbesondere wenn beispielsweise der Mikroorganismus auf Hefe bzw. Hefezellwänden immobilisiert vorliegend verwendet wird, kann durch gezielte Auswahl der eingesetzten Hefe die Vergärung weiter beschleunigt bzw. weiter unterstützt werden, so dass insbesondere eine rasche und vollständige Gärung erzielt werden kann und mit Sicherheit ein das hergestellte alkoholische Getränk störender Restzuckergehalt vermieden wird.

Indem, wie dies einer Weiterbildung der vorliegenden Erfindung entspricht, die Verwendung so geführt wird, dass die Mikroorganismen Aureobasidium pullulans DSM 14940 und Aureobasidium pullulans DSM 14941 in einem Verhältnis von 10 : 90 bis 90 : 10 eingesetzt werden, wird die positive Wirkung von beiden voneinander verschiedenen Aureobasidium pullulans Stämmen DSM 14940 und DSM 14941 während der Vergärung von Früchten herangezogen, wobei in Abhängigkeit von den auf den Früchten bzw. in der Maische enthaltenen, störenden Mikroorganismen das Verhältnis der beiden Aureobasidium pullulans Stämme zueinander beliebig eingestellt wird. Um insbesondere bei Vergären von Früchten, welche für den Befall mit Botrytis cinerea anfällig sind, wie beispielsweise weintrauben, Himbeeren, Erdbeeren und Brombeeren, die Infektionen durch Sekundärerreger hintanzuhalten, hat es sich bei derartigen Früchten, aufgrund ihrer Empfindlichkeit gegenüber Fäulnis und Botrytisbefall, als günstig erwiesen, bereits vor der Ernte wenigstens eine Spritzung mit einer Suspension enthaltend Aureobasidium pullulans Stämme DSM 14940 und DSM 14941 vorzunehmen, wodurch den Aureobasidium pullulans Stämme ausreichend Zeit zur Verfügung steht mit den Schaderregern um Nahrung und Lebensraum konkurrieren, so dass bereits bei der Ernte der Pflanzen der Gehalt an störenden Mikroorganismen bzw. Schädlingen deutlich herabgesetzt ist. Bei einer weiteren Spritzung unmittelbar nach der Ernte bzw. beim Impfen der Maische mit den verwendeten Mikroorganismen wird der Schadstoffgehalt weiter herabgesetzt, so dass die nachfolgende Vergärung vollständig und rasch, insbesondere die Spontanvergärung der Früchte, ablaufen kann.

Um insbesondere bei Früchten; welche wenige gärungstüchtige Hefen auf ihrer Oberfläche aufweisen, wie beispielsweise Äpfel, und Birnen eine vollständige und zuverlässige vergärung zu erzielen, wird gemäß der vorliegenden Erfindung die Verwendung so geführt, dass dem Vergärungshilfsmittel zusätzlich 5 bis 95 % bezogen auf die Gesamtmenge an Mikroorganismen natürlich vorkommende Saccaromyces cerevisae-Stämme zugesetzt sind.

Die Erfindung wird nachfolgend anhand von in der zeichnung dargestellten Ausführungsbeispielen näher erläutert, in welcher:

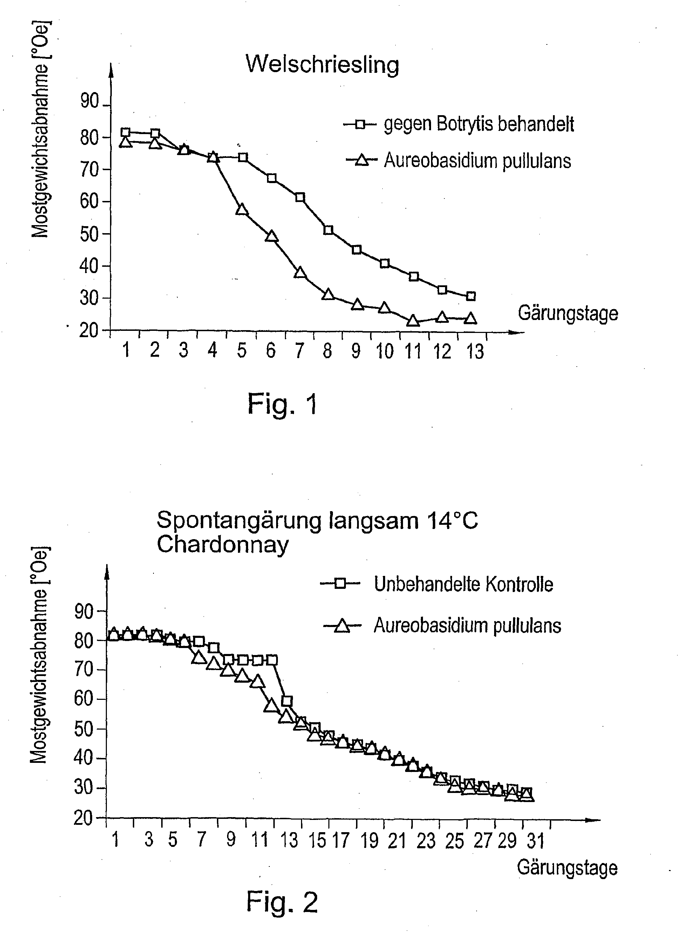

Fig. 1 ein Diagramm der Vergärung von Welschrieslingtrauben zeigt, wobei in einem Fall gegen Botrytis cinerea behandelte Weintrauben einer normalen Spontanvergärung unterzogen wurden und in einem anderen Fall eine unter Verwendung von Aureobasidium pullulans DSM 14940 und Aureobasidium pullulans DSM 14941 im Verhältnis 50 : 50 behandelte Maische derselben Welschrieslingtrauben einer Spontanvergärung unterzogen wurde,
Fig. 2 eine langsame Spontanvergärung von Chardonnaytrauben zeigt, wobei ein vergleich einer unbehandelten Kontrolle mit einer Charge, welche unter Verwendung einer Mischung von Aureobasidium pullulans DSM 14940 zu DSM 14941 im Verhältnis 70 : 30 behandelt wurde, dargestellt ist,

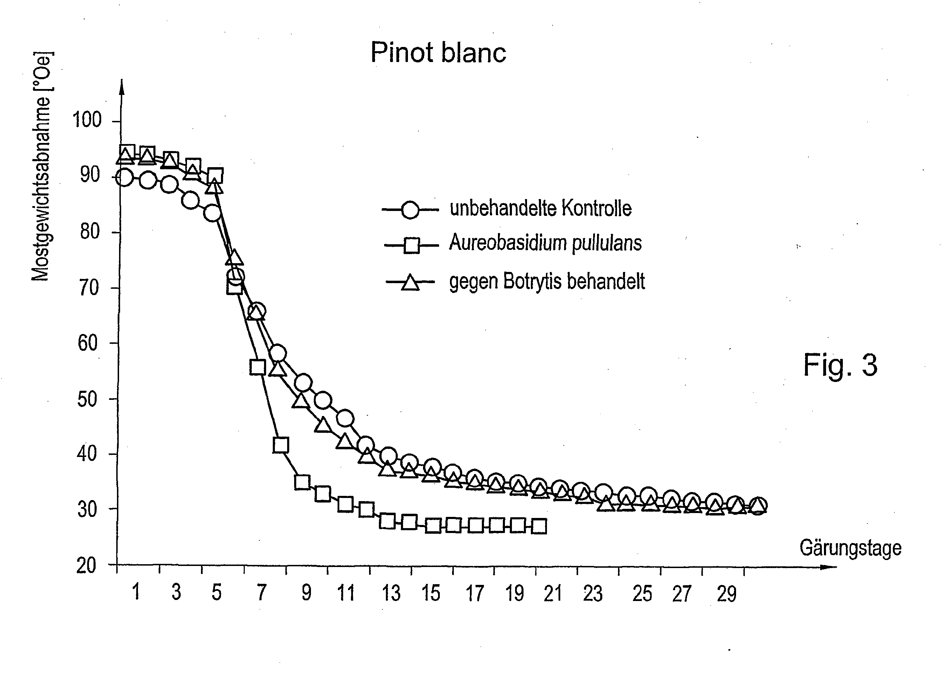

Fig. 3 eine Vergärung von Pinot blanc Trauben unter Zusatz von Reinzuchthefen zeigt, wobei eine unbehandelte Kontrolle mit einer unter Verwendung von Aureobasidium pullulans DSM 14940 und DSM 14941 im Verhältnis von 20 : 80 behandelten Charge sowie einer gegen Botrytis cinerea gespritzten Charge verglichen ist,

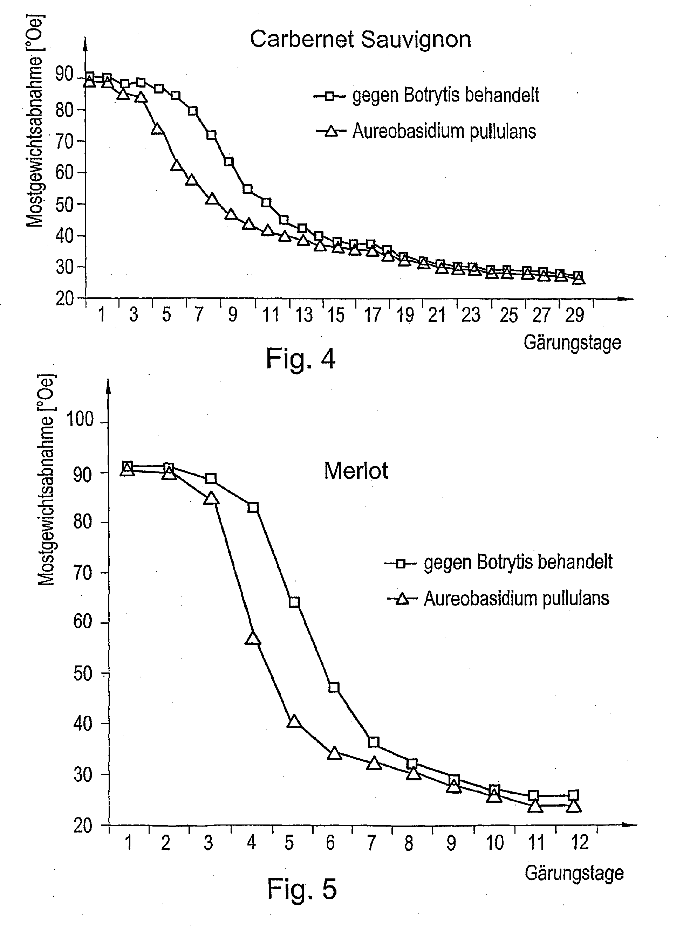

Fig. 4 eine langsame Spontanvergärung einer Maische aus Carbernet Sauvignon Trauben zeigt, wobei ein Vergleich einer Maischecharge, bei welcher die Trauben vor der Lese gegen Botrytis cinerea behandelt wurden, mit einer Charge gezeigt ist, welche unter Zusatz von Aureobasidium pullulans DSM 14940 und Aureobasidium pullulans DSM 14941 im Verhältnis von 55 : 45 behandelt wurde,
Fig. 5 eine vergärung von Merlot Trauben enthaltenden Maischen unter Zusatz einer Reinzuchthefe zeigt, wobei eine gegen Botrytis cinerea behandelte Charge mit einer Charge, welche unter Verwendung von Aureobasidium pullulans DSM 14940 und DSM 14941 im Verhältnis von 10 : 90 behandelt wurde, und

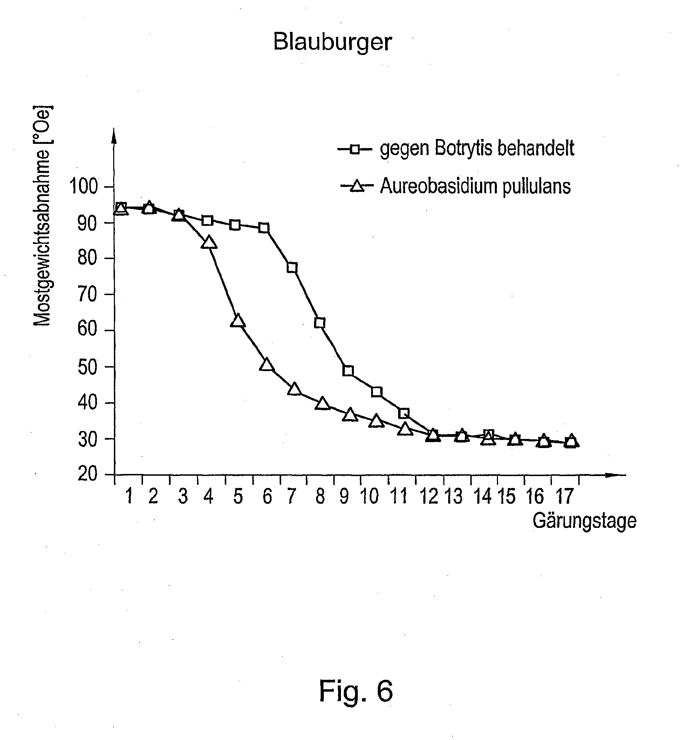

Fig. 6 eine Spontanvergärung einer Blauburger Trauben enthaltenden Maische, wobei eine gegen Botrytis cinerea behandelte Charge mit einer Charge, welcher Aureobasidium pullulans DSM 14940 und DSM 14941 im Verhältnis von 50 : 50 zugesetzt wurde, zeigt.

Des weiteren wurde ein Vergleichsversuch bei der Saftvergärung von Apfelsaft durchgeführt, wobei in einem Fall ein unbehandelter Apfelmost zum Einsatz gelangte und im anderen Fall ein Apfelsaft eingesetzt wurde, bei welchem die Äpfel unmittelbar nach der Ernte mit einer Suspension enthaltend Aureobasidium pullulans DSM 14940 behandelt wurden.

In Fig. 1 sind auf der Abszisse die Anzahl der Gärungstage aufgetragen und auf der Ordinate die Mostgewichtsabnahme während der Gärung in °Oe (Grad Öchsle) dargestellt. Bei dem Diagramm von Fig. 1 kann erkannt werden, dass bei Einsatz von Weintrauben, welche gegen Botrytis cinerea behandelt sind, die Gärung trotz eines Zusatzes von Reinzuchthefe langsam von Statten geht und auch am 13. Gärtag noch nicht vollständig abgelaufen ist, so dass insbesondere bei einem aus einer derartigen Gärung resultierenden Wein eine als Fehler überdeckende Süße zu erwarten ist, was insbesondere bei einem frischen, fruchtigen und jungen Weißwein, wie dies ein Welschriesling üblicherweise darstellt, von den Verbrauchern nachteilig empfunden wird bzw. als Fehler erkannt wird.

Demgegenüber ist bei Einsatz von Weintrauben, welche unter Verwendung von Aureobasidium pullulans DSM 14940 und Aureobasidium pullulans DSM 14941 im Verhältnis von 50 : 50 behandelt wurden, und zwar insbesondere einmal durch zweimaliges Spritzen mit einer im wesentlichen neutralen Suspension der Aureobasidium pullulans Stämme DSM 14941 und DSM 14940 einige Tage bzw. unmittelbar vor der Lese sowie nach Herstellung einer Maische ohne Zusatz einer Reinzuchthefe zu der Maische, eine bedeutend raschere Abnahme des Mostgewichts beobachtbar und überdies ist bereits nach dem 11. Tag die Vergärung vollständig, so dass ein mit einem derartigen Gärwerfahren erhaltener Welschriesling weder eine Restsüße, die Fehler überdeckt, aufweist, noch unvollständig vergoren ist.

In Fig. 2 ist eine langsame Spontanvergärung von Chardonnaytrauben bei 14 °C dargestellt, wobei der Vergleich einer unbehandelten Kontrolle mit einer Charge, in welcher Aureobasidium pullulans DSM 14940 und DSM 14941 in einem Verhältnis von 70 : 30 und zwar durch Zusatz zu dem zu vergärenden Saft, eingesetzt wurde, gezeigt ist.

Aus diesem Diagramm ist eindeutig zu entnehmen, dass insbesondere bei der Spontanvergärung der unbehandelten Kontrolle die Gärung einerseits nur langsam in Gang gekommen ist und insbesondere in der Zeit zwischen dem 9. und 13. Tag vollständig gehemmt war, wodurch die Entstehung von Weinfehlern, insbesondere unerwünschten Gärungsnebenprodukten zu befürchten war. Am Tag 13 wurde diese stecken gebliebene Gärung bei Zugabe von Hefe und Nährsalzen wieder in Gang gebracht und lief dann rasch bis zu einer langsamen, vollständigen Durchgärung des Traubenmosts ab.

Bei den mit Aureobasidium pullulans behandelten Chardornnaytrauben zeigte sich ebenfalls eine Abflachung der Gärkurve im Zeitraum zwischen dem 7. und 11. Tag, wobei jedoch ohne weitere Beiimpfung von Reinzuchthefen bzw. ohne Zusatz von Nährsalzen die Gärung selbständig weitergelaufen ist und ab dem Tag 14 in etwa gleich mit der Gärung der unbehandelten Kontrolle gelaufen ist. Aus diesem Ergebnis lässt sich erkennen, dass insbesondere bei der Spontanvergärung der Zusatz von Aureobasidium pullulans DSM 14941 bzw. DSM 14940 sicherstellt, dass die Spontanvergärung zuverlässig weiterläuft und nicht zum Stoppen kommt bzw. keinerlei Gärhemmung auftritt.

In Fig. 3 ist eine rasche Gärung von Pinot blanc Trauben unter Zusatz einer Reinzuchthefe dargestellt, wobei erkenntlich ist, dass eine unbehandelte Kontrolle ebenso wie eine gegen Botrytis cinerea behandelte Charge der Pinot blanc Trauben etwa gleich rasch vergären. In der Zeit zwischen dem 5. und dem 9. Tag findet eine relativ rasche Vergärung statt, die Gärkurve flacht zwischen dem 9. und 12. Tag ab und läuft anschließend ab dem 12. Tag nur mehr langsam bis zu einer vollständigen Vergärung ab dem 22. Tag weiter.

Demgegenüber vergären die Pinot blanc Trauben, welche mit den die Aureobasidium pullulans Stämmen in einem Verhältnis 20 : 80 DSM 14940 und DSM 14941 behandelt wurden, in den ersten 5 Tagen in etwa gleichlaufend mit den zwei anderen Gruppen von Weintrauben. Ab dem Tag 5 ist ein steiler Abfall der Gärkurve bis zum 9. Tag zu beobachten, was einer raschen Durchgärung des Traubenmosts entspricht, worauf eine starke Abflachung der Gärkurve bis zum 13. Tag erfolgt und ab dem 13. Tag die Weintrauben als vollständig durchgegoren betrachtet werden können.

Aus diesem Vergleich ergibt sich eindeutig, dass die unter Zusatz von Aureobasidium pullulans DSM 14940 bzw. DSM 14941 behandelten Pinot blanc Trauben bedeutend rascher durchgären, so dass insbesondere ein schlanker und trockener Weißwein zu erwarten ist, welcher keinerlei Gärfehler aufweist.

In Fig. 4 ist eine langsame Spontanvergärung einer Carbernet Sauvignon Trauben enthaltenden Maische dargestellt, wobei die Vergärung in den ersten 10 Tagen direkt in der Maische erfolgte und anschließend der abgepresste, rote Most endgültig vergoren wurde. Aus dem Diagramm ist eindeutig ersichtlich, dass bei der Spontanvergärung der Maischecharge, welche die Carbernet Sauvignon Trauben enthielt, die gegen Botrytis cinerea behandelt wurden, die Spontangärung etwa am 6. Tag in Gang gekommen ist und dann relativ rasch bis zum 13. Tag abgelaufen ist, wonach nur mehr eine langsame Restvergärung stattgefunden hat.

Bei jener Maische, der Carbernet Sauvignon Trauben enthielt, für welche die Carbernet Sauvignon Trauben unmittelbar vor der Lese mit Aureobasidium pullulans DSM 14940 und DSM 14941 im Verhältnis von 55 : 45 behandelt wurden, zeigte sich, dass bereits am 3. Tag die Spontanvergärung eingesetzt hat, welche in den Tagen 4 bis 10 sehr rasch abgelaufen ist und anschließend nur mehr langsam bis zu einer endgültigen Vergärung gelaufen ist. Die Vergärung wurde hiebei durch das Abpressen des roten Mosts weder bei der gegen Botrytis behandelten Charge noch bei der mit Aureobasidium pullulans DSM 14940 und DSM 14941 im Verhältnis von 55 : 45 behandelten Charge unterbrochen.

Insgesamt ist jedoch erkenntlich, dass die Spontanvergärung der Maische, welche die mit Aureobasidium pullulans behandelten Trauben enthielt, rasch eingesetzt hat und ohne jedes Stoppen bis zu einer vollständigen Durchgärung der Maische bzw. des abgepressten, roten Mosts weiterläuft.

In Fig. 5 ist die rasche Vergärung einer Maische, enthaltend Merlot Trauben dargestellt, wobei die gesamte Wergärung direkt in der Maische durchgeführt wurde und erst nach. Ende der Vergärung der Most abgepresst wurde. Die Vergärung beider Maischenchargen erfolgte unter Zusatz einer Reinzuchthefe, wobei erkenntlich ist, dass die gegen Botrytis cinerea behandelte Charge am Tag 3 zu vergären beginnt und die Vergärung bis zu Tag 7 rasch abläuft, wonach die Gärkurve zwischen dem 7. und 12. Tag stark abflacht.

Demgegenüber vergärt die Maische der Merlot Trauben, welche Trauben enthielt, die vor ihrer Lese mit den Aureobasidium pullulans Stämmen DMS 14940 und DSM 14941 im Verhältnis von 10 : 90 behandelt wurden, etwas rascher, insbesondere setzt die vergärung bereits am 2. Tag ein, verläuft zwischen dem 3. und 5. Tag sehr rasch, wonach zwischen dem 5. und 7. Tag die Gärkurve langsam abflacht, um danach in etwa mit der Gärkurve der gegen Botrytis behandelten Charge zusammenzufallen. An etwa dem 11. Tag kann die Maische als vollkommen durchgegoren betrachtet werden.

Aus diesem Vergleich ergibt sich, dass die Maischevergärung der Merlot Trauben, welche mit Aureobasidium pullulans vor der Lese behandelt wurden, deutlich rascher einsetzt und insbesondere deutlich rascher durchgärt, so dass eim Rotwein zu erwarten ist, welcher keinerlei Gärfehler aufweist.

In Fig. 6 ist die Spontanvergärung von Blauburger Trauben enthaltenden Maischen dargestellt, wobei bei einer Charge die Trauben vor der Lese mit einem herkömmlichen Mittel gegen Botrytis cinerea behandelt wurden und bei einer zweiten Charge die Trauben vor der Lese mit Aureobasidium pullulans DSM 14940 und DSM 14941 im Verhältnis von 50 : 50 behandelt wurden.

Aus dem vergleich der beiden Kurven ergibt sich, dass die Spontanvergärung der Maische, in welcher die gegen Botrytis cinerea behandelten Trauben zum Einsatz gelangt sind, bis zum 6. Tag nicht in Gang kam, worauf die Maische auf etwa 45 °C erhitzt wurde, um einerseits die Farbstoffe aus den Rotweintrauben zu lösen und andererseits die Vergärung in Gang zu setzen. Nach der Maischeerhitzung und nach Kelterung ist die Vergärung spontan in Gang gekommen und der Traubensaft ist bis zum 12. Tag vollständig durchgegoren.

Die zweite Maischecharge enthaltend jene Blauburger Trauben, die mit Aureobasidium pullulans DSM 14940 und DSM 14941 im Verhältnis 50 : 50 vor der Lese behandelt wurden, zeigt, dass die Spontanvergärung selbstständig am 3. Tag in Gang gekommen ist, sehr rasch bis zum 7. Tag abgelaufen ist, worauf sich die Gärkurve abgeflacht hat und am Tag 12. mit jener Charge zusammengefallen ist, deren Trauben gegen Botrytis cinerea in herkömmlicher Weise behandelt wurden.

Aus den Gärkurven ist ersichtlich, dass aufgrund der Gärhemmung der Maische, der Trauben, die in herkömmlicher Weise gegen Botrytis cinerea behandelt wurden, mit Gärfehlern beim gebildeten Wein zu rechnen sein dürfte und überdies konnte die Spontanvergärung erst durch eine Maischeerhitzung in Gang gebracht werden, wodurch eine weitere Verringerung der Qualität des erzielten Rotweins zu befürchten ist. Demgegenüber ist die Spontanvergärung der Blauburger Trauben enthaltenden Maische, bei welcher die Trauben vor der Ernte mit Aureobasidium pullulans DSM 14940 und DSM 14941 im Verhältnis von 50 : 50 behandelt wurden, gleichmäßig und rasch ohne jene Stockung abgelaufen, so dass ein schlanker Rotwein zu erwarten ist, welcher insbesondere keinerlei Gärfehler aufweist.

### Vergleichsversuch

### Saftvergärung von Mostäpfeln

Ein unbehandelter Apfelmost wurde mit Edelzuchthefen versetzt, um einen Apfelwein bzw. einen Apfelmost herzustellen, wobei die Gärung innerhalb von 6 Tagen vollständig abgelaufen ist und ein Apfelwein mit einem Alkoholgehalt von etwa 7 % erzielt wurde. Zur weiteren Lagerung des Produkts musste die Hefe rasch abgezogen werden, um aufgrund des niedrigen Alkoholgehalts des Apfelweins die Gefahr von mikrobiell bedingten Weinfehlern und insbesondere das Wachstum von unerwünschten Mikroorganismen hintanzuhalten.

Eine zweite Charge von Mostäpfeln wurde einmal vor der Ernte mit Aureobasidium pullulans DSM 14940 Suspension behandelt und einmal wurde der Obstmaische eine weitere Charge von Aureobasidium pullulans DSM 14940 zugesetzt. Die weitere Vergärung erfolgte analog der ersten Charge von Mostäpfeln und die Vergärungsgeschwindigkeit war geringfügig rascher als in der ersten Gruppe.

Überraschenderweise hat sich jedoch gezeigt, dass der hergestellte Apfelwein gegenüber dem Vergleichswein bedeutend stabiler war und insbesondere seine Anfälligkeit für mikrobiell bedingte Weinfehler und das Wachstum von unerwünschten Mikroorganismen, welche zum Verderb des Weins führen können, deutlich herabgesetzt war und insbesondere auch die Hefe nicht so rasch abgezogen werden musste.

## Patentansprüche

1. Verwendung von wenigstens einem der Gattung Aureobasidium pullulans und angehörenden Mirkoorganismus, gewählt aus Aureobasidium pullulans DSM 14940 oder Aureobasidium pullulans DSM 14941 als Vergärungshilfsmittel für Früchte, nämlich als Mittel zur Beschleunigung der Vergärung und/oder Mittel zur Vervollständigung der Vergärung von Früchten.

2. Verwendung nach Anspruch 1, **dadurch gekennzeichnet, dass** die Früchte Weintrauben sind.

3. Verwendung nach Anspruch 1 oder 2, **dadurch gekennzeichnet, dass** der Mikroorganismus als wässrige Suspension auf die Früchte aufgebracht wird, oder direkt in eine Fruchtmaische eingebracht wird.

4. Verwendung nach Anspruch 3, **dadurch gekennzeichnet, dass** die wässrige Suspension wenigstens zweimal vor Herstellung einer Fruchtmaische auf die Früchte aufgebracht wird.

5. Verwendung nach einem der Ansprüche 1 bis 4, **dadurch gekennzeichnet, dass** der Mikroorganismus in der wässrigen Suspension in einer Konzentration von 5*10⁷ KBE/l bis 5*10¹¹ KBE/l, vorzugsweise 1*10⁹ bis 1*10¹⁰ KBE/l enthalten ist.

6. Verwendung nach Anspruch 1 oder 2, **dadurch gekennzeichnet, dass** der Mikroorganismus auf einem inerten Träger, insbesondere einem Bentonit, Zeolith oder Kieselgur, Hefe bzw. Hefezellwänden, Milchpulver, Molkepulver, Kaliumsulfat oder Kalziumcarbonat, immobilisiert vorliegt.

7. Verwendung nach einem der Ansprüche 1 bis 4, **dadurch gekennzeichnet, dass** die Mikroorganismen Aureobasidium pullulans DSM 14940 und Aureobasidium pullulans DSM 14941 in einem Verhältnis von 10 : 90 bis 90 : 10 eingesetzt werden.

8. Verwendung nach einem der Ansprüche 1 bis 4, **dadurch gekennzeichnet, dass** zusätzlich dem Vergärungshilfsmittel 5 bis 95 % bezogen auf die Gesamtmenge an Mikroorganismen natürlich vorkommende Saccaromyces cerevisae-Stämme zugesetzt werden.

## Claims

1. The use of at least one microorganism belonging to the species *Aureobasidium pullulans* and selected from *Aureobasidium pullulans* DSM 14940 or *Aureobasidium pullulans* DSM 14941 as a fermentation aid for fruits, i.e. as an agent for accelerating, and/or an agent for completing, the fermentation of fruits.

2. The use according to claim 1, **characterized in that** the fruits are grapes.

3. The use according to claim 1 or 2, **characterized in that** the microorganism is applied onto the fruits as an aqueous suspension, or is directly introduced into a fruit mash.

4. The use according to claim 3, **characterized in that** the aqueous suspension is applied onto the fruits at least twice prior to the production of a fruit mash.

5. The use according to any one of claims 1 to 4, **characterized in that** the microorganism is contained in the aqueous suspension at a concentration of 5x10⁷ CFU/l to 5x10¹¹ CFU/l, preferably 1x10⁹ CFU/l to 1x10¹⁰ CFU/l.

6. The use according to claim 1 or 2, **characterized in that** the microorganism is present in immobilized form on an inert carrier, in particular bentonite, zeolite or diatomaceous earth, yeast or yeast cell walls, milk powder, whey powder, potassium sulfate or potassium carbonate.

7. The use according to any one of claims 1 to 4, **characterized in that** the microorganisms *Aureobasidium pullulans* DSM 14940 or *Aureobasidium pullulans* DSM 14941 are used at a concentration of 10:90 to 90:10.

8. The use according to any one of claims 1 to 4, **characterized in that** the fermentation aid is supplemented with an additional 5 to 95% of naturally occurring *Saccharomyces cerevisiae* strains, based on the overall amount of microorganisms.

## Revendications

1. Utilisation d'au moins un microorganisme du genre *Aureobasidium pullulans* et apparenté choisis parmi *Aureobasidium pullulans* DSM 14940 ou *Aureobasidium pullulans* DSM 14941 comme auxiliaires de fermentation de fruits, à savoir comme agents d'accélération de la fermentation et/ou agents d'achèvement de la fermentation des fruits.

2. Utilisation selon la revendication 1, **caractérisée en ce que** les fruits sont des raisins.

3. Utilisation selon la revendication 1 ou 2, **caractérisée en ce que** le microorganisme est appliqué en tant que suspension aqueuse sur les fruits ou intégré directement dans un moût de fruits.

4. Utilisation selon la revendication 3, **caractérisée en ce que** la suspension aqueuse est appliquée au moins deux fois sur les fruits avant la production d'un moût de fruits.

5. Utilisation selon l'une des revendications 1 à 4, **caractérisée en ce que** le microorganisme est contenu dans la suspension aqueuse en une concentration de 5*10⁷ KBE/l à 5*10¹¹ KBE/l, de préférence, de 1*10⁹ à 1*10¹⁰ KBE/l.

6. Utilisation selon la revendication 1 ou 2, **caractérisée en ce que** le microorganisme se trouve immobilisé sur un support inerte, en particulier, une bentonite, une zéolithe ou une terre de diatomées, une levure ou des parois cellulaires de levure, du lait en poudre, du lactosérum en poudre, du sulfate de potassium ou du carbonate de potassium.

7. Utilisation selon l'une des revendications 1 à 4, **caractérisée en ce que** les microorganismes *Aureobasidium pullulans* DSM 14940 et *Aureobasidium pullulans* DMS 14941 sont utilisés en un rapport de 10 : 90 à 90 : 10.

8. Utilisation selon l'une des revendications 1 à 4, **caractérisée en ce que** l'on utilise en plus de l'auxiliaire de fermentation, 5 à 95 % par rapport à la quantité totale de microorganismes de souches de *Saccharomyces cerevisae* présentes à l'état naturel.
